(19) **Europäisches Patentamt / European Patent Office / Office européen des brevets**

(11) **EP 4 545 487 A1**

(12) # EUROPEAN PATENT APPLICATION

(43) Date of publication:
30.04.2025 Bulletin 2025/18

(21) Application number: 24204952.6

(22) Date of filing: 07.10.2024

(51) International Patent Classification (IPC):
$C01G\ 53/50^{(2025.01)}$    $H01M\ 4/505^{(2010.01)}$
$H01M\ 4/36^{(2006.01)}$

(52) Cooperative Patent Classification (CPC):
C01G 53/50; H01M 4/366; H01M 4/505

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.10.2023 KR 20230143561

(71) Applicant: ECOPRO BM CO., LTD.
Cheongju-si, Chungcheongbuk-do 28116 (KR)

(72) Inventors:
• JEON, Se Hyeon
  28116 Cheongju-si, Chungcheongbuk-do (KR)
• JUNG, Hyun Su
  28116 Cheongju-si, Chungcheongbuk-do (KR)
• LIM, Ra Na
  28116 Cheongju-si, Chungcheongbuk-do (KR)

(74) Representative: Vossius & Partner
Patentanwälte Rechtsanwälte mbB
Siebertstrasse 3
81675 München (DE)

(54) **POSITIVE ELECTRODE ACTIVE MATERIAL AND LITHIUM SECONDARY BATTERY COMPRISING THE SAME**

(57) The present invention relates to a positive electrode active material and a lithium secondary battery including the same, and more particularly, to a positive electrode active material including an overlithiated lithium manganese-based oxide, wherein through surface modification of the lithium manganese-based oxide, the surface resistance of the lithium manganese-based oxide is reduced, thereby improving the lifetime characteristics of the lithium secondary battery, which uses the lithium manganese-based oxide as a positive electrode active material, and a lithium secondary battery including the same.

EP 4 545 487 A1

**Description**

BACKGROUND

**1. Field of the Invention**

The present invention relates to a positive electrode active material and a lithium secondary battery including the same, and more particularly, to a positive electrode active material including an overlithiated lithium manganese-based oxide, wherein the surface resistance of the lithium manganese-based oxide is lowered through surface modification of the lithium manganese-based oxide, thereby improving the lifetime characteristics of a lithium secondary battery which uses the lithium manganese-based oxide as a positive electrode active material, and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or a mixed oxide comprising two or more of Ni, Co, Mn or Al.

Among the positive electrode active materials, $LiCoO_2$ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while an $LiNiO_2$-based positive electrode active material exhibits a battery characteristic such as high discharge capacity, due to cation mixing between Li and a transition metal, it is difficult to synthesize the $LiNiO_2$-based positive electrode active material, thereby causing a big problem in rate performance.

In addition, depending on the intensity of such cation mixing, a large amount of Li by-products is generated. Most of the Li by-products include LiOH and $Li_2CO_3$, may cause gelation in the preparation of a positive electrode paste, or cause gas generation due to repeated charging/discharging after the manufacture of an electrode. In addition, residual $Li_2CO_3$ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO are low. As such, when the rate performance is low, there is a problem in that charge/discharge capacity and lifetime efficiency (capacity retention) are degraded during the cycling of a lithium secondary battery.

To solve the above-described problems, although various studies on changing the composition of OLO have been conducted, such attempts have not yet reached the level of commercialization.

SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that the electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the present inventors confirmed that in the case of lithium manganese-based oxide, the possibility of transition metals being eluted from the particle surface is high as charging/discharging is repeated, compared to a ternary lithium composite oxide. In particular, there is a high possibility that Mn contained in excess in the lithium manganese-based oxide will be eluted from the particle surface.

When a transition metal is eluted from the lithium manganese-based oxide, the eluted transition metal reacts with an electrolyte at the surface of the lithium manganese-based oxide, and thus impurities may be formed. These impurities not only increase the surface resistance of the lithium manganese-based oxide, but also reduce the intercalation/deintercalation efficiency of lithium ions through the lithium manganese-based oxide.

As described above, compared to other types of commercially available positive electrode active material, existing overlithiated lithium manganese-based oxides are disadvantageous in terms of electrochemical properties and/or stability. However, the present inventors confirmed that it is possible to suppress an anion redox of $Mn^{4+}$ to $Mn^{2+}$ in the lithium manganese-based oxide through surface modification of the lithium manganese-based oxide, stabilizing the unstable surface of the lithium manganese-based oxide, thereby improving the lifetime characteristics of a lithium secondary battery, which uses the lithium manganese-based oxide as a positive electrode active material.

The present inventors confirmed that through the surface modification of the lithium manganese-based oxide, not only a physical barrier is formed between the lithium manganese-based oxide and the electrolyte to reduce side reactions between the lithium manganese-based oxide and the electrolyte, but also when a spinel phase is formed on at least a portion of the surface of the lithium manganese-based oxide through the surface modification, the spinel phase stabilizes the unstable surface of the lithium manganese-based oxide, and thus the lifetime characteristics of a lithium secondary battery, which uses the lithium manganese-based oxide as a positive electrode active material, may be improved.

The present inventors also confirmed that when the surface resistance of the lithium manganese-based oxide is reduced through the surface modification of the lithium manganese-based oxide, it is possible to prevent early deterioration of the lithium manganese-based oxide and further improve the lifetime characteristics of a lithium secondary battery, which uses the lithium manganese-based oxide as a positive electrode active material.

The present invention is directed to providing a positive electrode active material including an overlithiated lithium manganese-based oxide, which is capable of improving the lifetime characteristics of a lithium secondary battery using the lithium manganese-based oxide as a positive electrode active material by reducing the surface resistance of the lithium manganese-based oxide through surface modification of the lithium manganese-based oxide, which uses molybdenum.

The present invention is also directed to providing a positive electrode including a positive electrode current collector and a positive electrode active material layer formed on the positive electrode current collector, wherein the positive electrode active material layer includes the positive electrode active material defined herein.

The present invention is also directed to providing a lithium secondary battery which prevents a lifetime reduction due to the excessive amounts of lithium and manganese in existing OLO by using the positive electrode defined herein.

According to an aspect of the present invention to solve the above technical problems, there is provided a positive electrode active material including a lithium manganese-based oxide, in which a phase belonging to the C2/m space group and a phase belonging to the R3-m space group are dissolved.

In the case of commercially available ternary lithium composite oxides with a nickel-cobalt-manganese (NCM) or nickel-cobalt-aluminum (NCA) composition, a phase belonging to the R3-m space group is present as a single phase, whereas in the overlithiated lithium manganese-based oxide defined herein, a phase belonging to the C2/m space group and a phase belonging to the R3-m space group are dissolved in a solid solution.

In an embodiment of the present invention, the lithium manganese-based oxide may be represented by Chemical Formula 1 below.

[Chemical Formula 1] $\quad\quad rLi_2MnO_{3-c}X'_c \cdot (1-r)Li_aM1_xM2_yO_{2-b}X_b$

Wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1, X and X' each are independently halogens capable of substituting at least some of the oxygen in the lithium manganese-based oxide, and $0<r\leq0.7$, $0<a\leq1$, $0\leq b\leq0.1$, $0\leq c\leq0.1$, $0<x\leq1$, $0\leq y<1$, and $0<x+y\leq1$ are satisfied.

The lithium manganese-based oxide may further include a spinel phase belonging to the Fd-3m space group. Thus, the lithium manganese-based oxide may be a solid solution of the phase belonging to the C2/m space group, the phase belonging to the R3-m space group, and the spinel phase belonging to the Fd-3m space group.

In an embodiment of the present invention, the lithium manganese-based oxide may be represented by Chemical Formula 2 below.

[Chemical Formula 2]     $(1-z)\{rLi_2MnO_{3-c}X'_c\cdot(1-r)Li_aM1_xM2_yO_{2-b}X_b\}\cdot zLi(Li_dMn_{2-d-e}M3_e)O_{4-g}X''_g$

Wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1, M3 is at least one selected from Ni, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, X, X', and X" each are independently halogens capable of substituting at least some of the oxygen present in the lithium manganese-based oxide, and $0<r\leq0.7$, $0<a\leq1$, $0\leq b\leq0.1$, $0\leq c\leq0.1$, $0<x\leq1$, $0\leq y<1$, $0<x+y\leq1$, $0<z\leq0.5$, $0\leq d\leq1$, $0<e\leq1$, and $0\leq g\leq0.1$ are satisfied.

The lithium manganese-based oxide may be core-shell particles including a core portion, in which a phase belonging to the C2/m space group and a phase belonging to the R3-m space group are dissolved, and a shell portion, which is present on at least a portion of the surface of the core portion and has a spinel phase belonging to the Fd-3m space group. As the core portion and the shell portion are dissolved in solid solution, there is no grain boundary between the core portion and the shell portion.

A molybdenum-containing coating layer may be present on at least a portion of the surface of the shell portion.

According to another aspect of the present invention, there is provided a positive electrode including the positive electrode active material defined herein. Specifically, the positive electrode may include a positive electrode current collector and a positive electrode active material layer formed on the positive electrode current collector, and the positive electrode active material is present in the positive electrode active material layer.

Still another aspect of the present invention, there is provided a lithium secondary battery including the positive electrode defined herein. Specifically, the lithium secondary battery may include the positive electrode defined herein, a negative electrode, a separator interposed between the positive electrode and the negative electrode, and an electrolyte.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 shows the SEM image and the EDS analysis results (target element: Mo) of the surface of the lithium manganese-based oxide (secondary particles) according to Example 3;
FIG. 2 shows the SEM image of a cross-section of the lithium manganese-based oxide, on which the line-scanning direction is depicted, according to Example 3; and
FIG. 3 shows the SEM image and the EDS analysis results (target element: Mo) of the surface of the lithium manganese-based oxide (secondary particles) according to Example 4.

DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material, which includes an overlithiated lithium manganese-based oxide, and a lithium secondary battery including the positive electrode active material according to some embodiments of the present invention will be described in more detail.

Positive electrode active material

According to one aspect of the present invention, a positive electrode active material including a lithium manganese-based oxide in which a phase belonging to a C2/m space group and a phase belonging to an R3-m space group are dissolved is provided.

The phase belonging to a C2/m space group and the phase belonging to a R3-m space group may be distinguished not only through the composition of each phase, but also by a peak specific to each phase during XRD analysis. For example, the specific peak for the phase belonging to a C2/m space group may appear in the area of $2\theta=20.8 \pm 1°$, and the specific peak for the phase belonging to a R3-m space group may appear in the area of $2\theta=18.6\pm1°$.

As the lithium manganese-based oxide is a composite oxide in which a phase belonging to a C2/m space group and a phase belonging to a R3-m space group are dissolved, a phase belonging to a C2/m space group and a phase belonging to a R3-m space group coexist in the lithium manganese-based oxide. In other words, the lithium manganese-based oxide is a composite oxide comprising a phase belonging to a C2/m space group and a phase belonging to a R3-m space group. The phase belonging to a C2/m space group and the phase belonging to a R3-m space group can be considered to be dispersed in the remainder of the lithium manganese-based oxide. In addition, the lithium manganese-based oxide is different from a composite oxide having a spinel crystal structure belonging to an Fd-3m space group (e.g., $LiMn_2O_4$ or an oxide having a composition similar thereto).

The lithium manganese-based oxide includes at least lithium, manganese, and a transition metal other than manganese. The transition metal may include at least one selected from nickel, cobalt, and aluminum. Thus, the term "transition metal" as used in the present invention includes aluminum. Furthermore, manganese in the present invention is typically not intended if the term "transition metal" is used. In addition, the lithium manganese-based oxide may include lithium, nickel, and manganese, and may optionally further include a transition metal other than nickel.

The lithium manganese-based oxide may also be referred to an overlithiated layered oxide (OLO) because the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is larger than 1).

In addition, the lithium manganese-based oxide is also referred to an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

Accordingly, the lithium manganese-based oxide used herein may be defined as a composite oxide in which the content of manganese among all metal elements, excluding lithium, is 50 mol% or more, preferably 60 mol% or more, or a composite oxide in which the content of manganese is 50 mol% or more, preferably 60 mol% or more, and the nickel content is less than 50 mol%, preferably 40 mol% or less, among all metal elements, excluding lithium.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate in which a plurality of primary particles are aggregated, the lithium manganese-based oxide may be referred to as a secondary particle.

The positive electrode active material may include at least one selected from a lithium manganese-based oxide present as a single particle and a lithium manganese-based oxide present as a secondary particle in which a plurality of primary particles are aggregated.

The primary particle constituting the lithium manganese-based oxide may have a rod shape, an oval shape, and/or an irregular shape. In addition, unless specifically intended during the manufacturing process, primary particles having various shapes are present in the same positive electrode active material. In addition, the primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter in the range of from 0.05 to 5 $\mu$m, 0.05 to 1.0 $\mu$m, 0.1 to 1.0 $\mu$m, or 0.25 to 0.75 $\mu$m. Here, the average particle diameter of the primary particles may be the average value of the length of the primary particle in the major axis direction and the length of the primary particle in the minor axis direction ([major axis length+minor axis length]/2). Also, the average particle diameter of the primary particle can be calculated as the average value of the particle diameters of all primary particles observed from the surface SEM image of the lithium manganese-based oxide.

When the average particle diameter of the primary particles is smaller than 0.05 $\mu$m, the lithium manganese-based oxide (secondary particles) consisting of the primary particles has a relatively large specific surface area. In this case, the possibility of side reactions between the lithium manganese-based oxide and an electrolyte solution may increase during the storage or operation of a lithium secondary battery.

On the other hand, when the average particle diameter of the primary particles is larger than 5 $\mu$m, as the growth of the primary particles is excessively induced, the diffusion path of lithium ions in the primary particle also becomes longer. When the diffusion path of lithium ions in the primary particle is excessively long, the mobility of lithium ions in the primary particle and the diffusivity of lithium ions mediated by the primary particle decrease, which becomes the cause of an increase in resistance of the lithium manganese-based oxide (secondary particles) composed of the primary particles.

Accordingly, in order to reduce the specific surface area of the lithium manganese-based oxide and prevent the mobility of lithium ions in the primary particles and the diffusivity of lithium ions via the primary particles from being reduced, the average particle diameter of the primary particles may be in the range of from 0.05 to 5 $\mu$m, 0.05 to 1.0 $\mu$m, 0.1 to 1.0 $\mu$m, or 0.25 to 0.75 $\mu$m.

When the lithium manganese-based oxide is present as secondary particles in which a plurality of primary particles are aggregated, the average particle diameter of the secondary particles may be in the range of from 0.5 to 15 $\mu$m, 1.0 to 15 $\mu$m, 2.0 to 15 $\mu$m, 3.0 to 15 $\mu$m, 4.0 to 15 $\mu$m, or 5.0 to 15 $\mu$m. The average particle diameter of the secondary particles may vary according to the number of primary particles constituting the secondary particle. The average particle diameter ($D_{50}$) of the secondary particles may be measured using a laser diffraction method. For example, after dispersing the secondary particles in a dispersion medium, introducing the same into a commercially available laser diffraction particle size measurement device (e.g., Microtrac MT 3000) and irradiating ultrasonic waves at about 28 kHz at an output of 60 W, a volume cumulative particle size distribution graph may be obtained, from which a particle size corresponding to 50% of the volume accumulation amount is obtained, and thus the average particle diameter ($D_{50}$) may be measured. The term "particle size" is used herein interchangeably with the term "particle diameter". Any particle diameter mentioned herein are median volume-based particle diameters as determined by laser diffraction, unless specified otherwise in the context.

Unless otherwise defined, the term "surface of the primary particle" used herein means the outer surface of the primary particle exposed to the outside. Likewise, the term "surface of the secondary particle" used herein refers to the outer surface of the secondary particle exposed to the outside. Here, the "surface of the secondary particle" formed by aggregating a plurality of primary particles correspond to the exposed surface of the primary particle present on the surface region of the secondary particle.

In addition, unless defined otherwise, the term "surface region of a particle" used herein refers to the area relatively close to the "outermost surface" of a particle, and the "center of a particle" refers to the area relatively closer to the "exact center" of a particle, compared to the "surface region." Accordingly, the "surface region of the primary particle" refers to the area relatively close to the "outermost surface" of the primary particle, and the "center of the primary particle" refers to the region relatively closer to the "exact center" of the primary particle, compared to the "surface region." Likewise, the "surface region of a secondary particle" refers to the region relatively close to the "outermost surface" of the secondary particle, and the "center of a secondary particle" refers to the area relatively closer to the "exact center" of the secondary particle, compared to the "surface region."

Here, the area excluding the "surface region of a particle" in any particle may be defined as the "center of a particle."

For example, when the radius of the primary particle is r, the area where the distance from the surface of the primary particle is 0 to 0.5r may be defined as the surface region of the primary particle, and the region where a distance from the exact center of the primary particle is 0 to 0.5r may be defined as the center of the primary particle. When the radius of the primary particle is 0.5 $\mu$m, the surface region of the primary particle is the region where the distance from the surface of the primary particle ranges from 0 to 0.25 $\mu$m, and the center of the primary particle may be defined as the region where the distance from the exact center of the primary particle ranges from 0 to 0.25 $\mu$m.

In addition, as needed, when the radius of the primary particle is r, the region in which the distance from the surface of the primary particle ranges from 0 to 0.1r or 0 to 0.2r is defined as the surface region of the primary particle, and the region in which the distance from the exact center of the primary particle ranges from 0 to 0.2r or 0 to 0.5r may be defined as the center of the primary particle.

Likewise, when the radius of the secondary particle is r, the area where the distance from the surface of the secondary particle ranges from 0 to 0.5r may be defined as the surface region of the secondary particle, and the region where a distance from the exact center of the secondary particle ranges from 0 to 0.5r may be defined as the center of the secondary particle. When the radius of the secondary particle is 2.0 $\mu$m, the surface region of the secondary particle is the region where the distance from the surface of the secondary particle ranges from 0 to 1.0 $\mu$m, and the center of the secondary particle may be defined as the region where the distance from the exact center of the secondary particle ranges from 0 to 1.0 $\mu$m.

In addition, as needed, when the radius of the secondary particle is r, the area where the distance from the surface of the secondary particle ranges from 0 to 0.1r or 0 to 0.2r may be defined as the surface region of the secondary particle, and the region where a distance from the exact center of the secondary particle ranges from 0 to 0.2r or 0 to 0.5r may be defined as the center of the secondary particle.

The lithium manganese-based oxide defined herein may be the overlithiated lithium manganese-based oxide represented by Chemical Formula 1 below.

[Chemical Formula 1]     $rLi_2MnO_{3-c}X'_c \cdot (1-r)Li_aM1_xM2_yO_{2-b}X_b$

$(0 < r \leq 0.7, 0 \leq c \leq 0.1, 0 < a \leq 1, 0 \leq b \leq 0.1, 0 < x \leq 1, 0 \leq y < 1,$ and $0 < x+y \leq 1)$

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1. It is to be understood that typically at least one of M1 and M2 is an element other than manganese.

X and X' each are independently halogens capable of substituting at least some of the oxygen in the lithium manganese-based oxide. For the types of halogen that may be used as X and X', the periodic table can be referenced, and F, Cl, Br and/or I, and preferably, F may be used.

In Chemical Formula 1, when M1 is Ni, M2 may include Mn, and when M1 is Mn, M2 may include Ni. In addition, when M1 is Ni and Mn, M2 may not be present, or if present, M2 may be an element other than Ni and Mn.

In other words, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si) and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si) and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si.

The lithium manganese-based oxide represented by Chemical Formula 1 may optionally include cobalt. When the lithium manganese-based oxide includes cobalt, the mole fraction of cobalt relative to the total number of moles of metal elements in the lithium manganese-based oxide may be 20% or less, preferably 15% or less, and more preferably 10% or less. In other cases, the lithium manganese-based oxide represented by Chemical Formula 1 may have a cobalt-free composition that does not include cobalt.

The Li/Metal molar ratio measured from the lithium manganese-based oxide represented by Chemical Formula 1 may be more than 1, 1.1 to 1.6, 1.1 to 1.5, 1.2 to 1.6, or 1.2 to 1.5. When the Li/Metal molar ratio measured from the lithium manganese-based oxide is more than 1, it is possible to form an overlithiated lithium manganese-based oxide. In addition, in order for the lithium manganese-based oxide to properly form a solid solution in which the phase belonging to the C2/m space group and the phase belonging to the R3-m space group are dissolved, and at the same time, exhibit high capacity under high-voltage operating conditions, the Li/Metal molar ratio of the lithium manganese-based oxide may be preferably 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

In order to properly form a solid solution in which the phase belonging to the C2/m space group and the phase belonging to the R3-m space group are dissolved, the content of manganese among all metal elements excluding lithium in the lithium manganese-based oxide represented by Chemical Formula 1 may be preferably 50 mol% or more. In order for the lithium manganese-based oxide to have the characteristics of OLO such as high capacity under high-voltage operating conditions, the content of manganese among all metal elements excluding lithium in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% or more and 75 mol% or less, 51 mol% or more and 75 mol% or less, 52 mol% or more and 75 mol% or less, 53 mol% or more and 75 mol% or less, 54 mol% or more and 75 mol% or less, and 55 mol% to 75 mol%. When the content of manganese in the lithium manganese-based oxide exceeds 80 mol%, a phase transition may occur due to the movement of transition metals (particularly manganese) in the lithium manganese-based oxide during the formation and/or operation of the lithium secondary battery. As such a phase transition occurs at random positions in the lithium manganese-based oxide, the phase transition may cause a decrease in charge/discharge capacity or voltage decay during the cycling of a lithium secondary battery using the lithium manganese-based oxide as a positive electrode active material. When the content of manganese in the lithium manganese-based oxide exceeds 80 mol%, it may be difficult to sufficiently form a phase belonging the R3-m space group.

In order to properly form a solid solution in which the phase belonging to the C2/m space group and the phase belonging to the R3-m space group are dissolved, the content of nickel among all metal elements excluding lithium in the lithium manganese-based oxide represented by Chemical Formula 1 may be less than 50 mol%, 48 mol% or less, 46 mol% or less, 45 mol% or less, 44 mol% or less, 42 mol% or less, or 40 mol% or less.

When the nickel content in the lithium manganese-based oxide is 50 mol% or more, the C2/m phase is not sufficiently formed or the phase belonging to the C2/m space group and the phase belonging to the R3-m space group do not sufficiently form a solid solution, and thus phase separation may occur during the formation and/or operation of the lithium secondary battery.

In general, in the case of commercially available ternary lithium composite oxides with a nickel-cobalt-manganese (NCM) or nickel-cobalt-aluminum (NCA) composition, the phase belonging to the R3-m space group is present as a single-phase.

On the other hand, the overlithiated lithium manganese-based oxide represented by Chemical Formula 1 is present as a composite oxide in which an oxide of a phase belonging to the C2/m space group represented by $rLi_2MnO_{3-c}X'_c$ (hereinafter referred to as "C2/m phase") and an oxide of a phase belonging to the R3-m space group represented by $(1-r)Li_aM1_xM2_yO_{2-b}X_b$ (hereinafter referred to as "R3-m phase") are dissolved in a solid solution. In the present application, the fact that the phase belonging to the C2/m phase and the phase belonging to the R3-m phase are dissolved means that the oxide of the C2/m phase and the oxide of the R3-m phase are present while forming a solid solution.

In this case, a composite oxide in which a phase belonging to the C2/m space group and a phase belonging to the R3-m space group are simply physically and/or chemically combined or attached does not correspond to a solid solution as defined herein.

For example, a composite oxide having a phase belonging to the C2/m space group, whose surface is coated with a metal oxide having a phase belonging to the R3-m space group, which is formed by mixing a metal oxide having a phase belonging to the C2/m space group and a metal oxide having a phase belonging to the R3-m space group, does not correspond to a solid solution as defined herein.

In the lithium manganese-based oxide represented by Chemical Formula 1, when r exceeds 0.7, since the proportion of $Li_2MnO_{3-c}X'_c$, which is a C2/m phase oxide, in the lithium manganese-based oxide excessively increases, the irreversible capacity and resistance of the positive electrode active material increase, which may reduce discharge capacity. In other words, in order to improve surface kinetics by sufficiently activating the C2/m phase oxide with relatively high resistance in the lithium manganese-based oxide, the R3-m phase oxide is preferably present in a predetermined proportion or more.

The lithium manganese-based oxide may further include a spinel phase belonging to the Fd-3m space group. In this case, the lithium manganese-based oxide is present as a solid solution in which a phase belonging to the C2/m space group, a phase belonging to the R3-m space group, and a spinel phase belonging to the Fd-3m space group are dissolved.

The spinel phase may be formed through surface modification of the lithium manganese-based oxide. Through surface modification of the lithium manganese-based oxide, the spinel phase is formed on at least a portion of the lithium manganese-based oxide surface (that is, part or all of the surface of the lithium manganese-based oxide), thereby suppressing the anion redox of $Mn^{4+}$ to $Mn^{2+}$ in the lithium manganese-based oxide and stabilizing the unstable surface of the lithium manganese-based oxide.

Since the spinel phase is formed on the surface of the lithium manganese-based oxide, the spinel phase is different from the phase formed by a phase transition that occurs at random positions in the lithium manganese-based oxide due to the movement of transition metals (in particular, manganese) in the lithium manganese-based oxide.

The lithium manganese-based oxide in which a phase belonging to the C2/m space group, a phase belonging to the R3-m space group, and a spinel phase belonging to the Fd-3m space group are dissolved may be represented by Chemical Formula 2 below.

[Chemical Formula 2]    $(1-z)\{rLi_2MnO_{3-c}X'_c \cdot (1-r)Li_aM1_xM2_yO_{2-b}X_b\} \cdot zLi(Li_dMn_{2-d-e}M3_e)O_{4-g}X''_g$

$(0<r\leq0.7, 0\leq c\leq0.1, 0<a\leq1, 0\leq b\leq0.1, 0<x\leq1, 0\leq y<1, 0<x+y\leq1, 0<z\leq0.5, 0\leq d\leq1, 0<e\leq1,$ and $0\leq g\leq0.1)$

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1. It is to be understood that typically at least one of M1 and M2 is an element other than manganese.

X, X', and X" each are independently halogens capable of substituting at least some of the oxygen in the lithium manganese-based oxide. For the types of halogen that may be used as X and X', the periodic table can be referenced, and F, Cl, Br and/or I, and preferably, F may be used.

The description of the phase belonging to the C2/m space group and the phase belonging to the R3-m space group in the lithium manganese-based oxide represented by Chemical Formula 2 is the same as that of the lithium manganese-based oxide represented by Chemical Formula 1.

M3 is at least one selected from Ni, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd. Preferably, M3 is Ni and may optionally include at least one element selected from Ni, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd.

In Chemical Formula 2, the composition of the spinel phase belonging to the Fd-3m space group is expressed as $zLi(Li_dMn_{2-d-e}M3_e)O_{4-g}X''_g$. For example, the spinel phase may be expressed as $LiMn_{1.5}Ni_{0.5}O_4$.

In the lithium manganese-based oxide represented by Chemical Formula 2, when z exceeds 0.5, the proportion of the spinel phase in the lithium manganese-based oxide excessively increases, and thus the irreversible capacity and resistance of the positive electrode active material increase, which may reduce discharge capacity.

In an embodiment of the present invention, the lithium manganese-based oxide may be core-shell particles including a core portion in which a phase belonging to the C2/m space group and a phase belonging to the R3-m space group are dissolved, and a shell portion, which is present on at least a portion of the surface of the core portion and has a spinel phase belonging to the Fd-3m space group. As the core portion and the shell portion are dissolved, there is no grain boundary between the core portion and the shell portion.

When the lithium manganese-based oxide is a core-shell particle, the ratio of the core portion to the total volume of the lithium manganese-based oxide is 1% to 99%, preferably 30% to 99%, more preferably 50% to 99%.

When the core portion is a secondary particle in which a plurality of primary particles are aggregated, the shell portion where the spinel phase is present may be present on at least a portion of the surface of the primary particles. In other words, the primary particles may be present as independent particles in which a phase belonging to the C2/m space group, a phase belonging to the R3-m space group, and a spinel phase belonging to the Fd-3m space group are dissolved.

When the core portion is a secondary particle in which a plurality of primary particles are aggregated, the shell portion where the spinel phase is present may be present on at least a portion of the surface of the secondary particles. In other words, primary particles inside and/or at the center of the secondary particles are present as particles in which the phase belonging to the C2/m space group and the phase belonging to the R3-m space group are dissolved, whereas primary particles on the outermost surface of the secondary particles and/or in a region close to the outermost surface of the secondary particles (the surface of the secondary particles) are present as particles in which the phase belonging to the C2/m space group, the phase belonging to the R3-m space group, and the spinel phase belonging to the Fd-3m space group are dissolved.

The shell portion where the spinel phase is present may be present in a diffused form along the boundary between the primary particles from the surface to the center of the secondary particles. Therefore, the proportion of the spinel phase in the lithium manganese-based oxide may be higher at the surface of the secondary particles than at the center of the secondary particles. Likewise, the proportion of primary particles in which the phase belonging to the C2/m space group, the phase belonging to the R3-m space group, and the spinel phase belonging to the Fd-3m space group are dissolved may be higher at the surface than at the center of the secondary particles.

In the present application, the spinel phase may be formed through surface modification of the lithium manganese-based oxide using molybdenum. Through the surface modification, a molybdenum-containing coating layer may be formed on at least a portion of the surface of the lithium manganese-based oxide.

When the surface resistance of the lithium manganese-based oxide is reduced, the molybdenum-containing coating layer prevents early deterioration of the lithium manganese-based oxide and may further improve the lifetime characteristics of a lithium secondary battery, which uses the lithium manganese-based oxide as a positive electrode active material. In addition, the molybdenum-containing coating layer may induce the formation of a spinel phase on the surface of the lithium manganese-based oxide.

The molybdenum-containing coating layer may include at least one selected from $MoO_3$ and $Li_2MoO_4$.

When the lithium manganese-based oxide is present as a secondary particle in which a plurality of primary particles are aggregated, molybdenum may be present at a higher concentration on the surface of the secondary particles compared to the inside of the secondary particles. The terms "the surface of the secondary particles" and "the inside of the secondary particle" are used to indicate the relative differences in the concentrations of molybdenum mentioned above. That is, this means that the concentration of molybdenum in the region relatively close to the outermost surface of the secondary particle is higher than the concentration of molybdenum in the region relatively close to the center of the secondary particle. In other words, it means that the concentration of molybdenum in the surface portion of the secondary particle is higher than the concentration of molybdenum in the center portion of the secondary particle, and the definitions of the terms "surface portion of the secondary particle" and "center of the secondary particle" are as defined herein. Unless otherwise defined below, the surface of a secondary particle refers to the surface portion of a secondary particle, and the inside of a secondary particle refers to the center of a secondary particle.

When the lithium manganese-based oxide is a core-shell particle including a core portion in which the phase belonging to the C2/m space group and the phase belonging to the R3-m space group are dissolved, and a shell portion, which is present on at least a portion of the surface of the core portion and has a spinel phase belonging to the Fd-3m space group, the molybdenum-containing coating layer may be present on at least a portion of the surface of the shell portion.

When the core portion is a secondary particle in which a plurality of primary particles are aggregated, molybdenum may be present at a higher concentration on the surface of the secondary particles compared to the inside of the secondary particles. The molybdenum may form a concentration gradient that decreases along the grain boundaries between the primary particles from the surface of the secondary particles toward the inside of the secondary particles.

The surface-modified positive electrode active material as defined herein may have the following characteristics when subjected to X-ray diffraction analysis using Cu-K$\alpha$ rays.

In an embodiment of the present invention, in X-ray diffraction analysis using Cu-K$\alpha$ rays for the positive electrode active material, the intensity ratio between the diffraction peaks of the (003) and (104) planes satisfies Equation 1 below,

$$[\text{Equation 1}]$$

$$1.59 \le I(003)/I(104) \le 2.6$$

I(003)/I(104) according to Equation 1 may be 1.59 or more and 2.6 or less, 1.59 or more and 2.5 or less, 1.59 or more and 2.3 or less, 1.591 or more and 2.1 or less, or 1.591 or more and 2.012 or less.

As the spinel phase belonging to the Fd-3m space group is formed in the surface-modified positive electrode active material as defined herein, the intensity of the (104) plane diffraction peak, which appears at 2$\theta$=43.5° to 45.0°, may be weakened.

When 1(003)/1(104) according to Equation 1 is greater than 2.6, the spinel phase is excessively formed in the lithium manganese-based oxide. In this case, as the irreversible capacity and resistance of the positive electrode active material increase, the charge/discharge capacity and discharge capacity retention of the lithium secondary battery, which uses the lithium manganese-based oxide as a positive electrode active material, may be reduced.

On the other hand, when I(003)/I(104) according to Equation 1 is less than 1.59, almost no spinel phase is formed in the lithium manganese-based oxide. In this case, it is difficult to stabilize the unstable surface of the lithium manganese-based oxide because the spinel phase does not sufficiently suppress the anion redox reaction, and thus the lifetime characteristics of the lithium secondary battery, which uses the lithium manganese-based oxide as a positive electrode active material, may not be improved.

In X-ray diffraction analysis of the positive electrode active material using Cu-K$\alpha$ rays, the full width at half maximum (FWHM) of the (104) plane diffraction peak may be 0.27 to 0.50, 0.27 to 0.40, or 0.27 to 0.382.

As the spinel phase belonging to the Fd-3m space group is formed in the surface-modified positive electrode active material as defined herein, the FWHM of the (104) plane diffraction peak, which appears at 2$\theta$=43.5° to 45.0°, may increase.

When the FWHM of the (104) plane diffraction peak is greater than 0.50, the spinel phase is excessively formed in the lithium manganese-based oxide. In this case, as the irreversible capacity and resistance of the positive electrode active material increase, the charge/discharge capacity and discharge capacity retention of the lithium secondary battery, which uses the lithium manganese-based oxide as a positive electrode active material, may be reduced.

On the other hand, when the FWHM of the (104) plane diffraction peak is less than 0.27, almost no spinel phase is formed in the lithium manganese-based oxide. In this case, it is difficult to stabilize the unstable surface of the lithium manganese-based oxide because the spinel phase does not sufficiently suppress the anion redox reaction.

In X-ray diffraction analysis of the positive electrode active material using Cu-K$\alpha$ rays, the intensity ratio between the diffraction peaks of the (018) and (110) planes satisfies Equation 2 below.

$$[\text{Equation 2}]$$

$$1.15 \leq I(018)/I(110) \leq 1.55$$

I(018)/I(110) according to Equation 2 may be 1.15 or more and 1.55 or less, 1.15 or more and 1.50 or less, or 1.157 or more and 1.545 or less.

As the spinel phase belonging to the Fd-3m space group is formed in the surface-modified positive electrode active material as defined herein, the intensity of the (110) plane diffraction peak, which appears at $2\theta=64.7°$ to $65.5°$, may be weakened.

When 1(018)/1(110) according to Equation 2 is greater than 1.55, the spinel phase is excessively formed in the lithium manganese-based oxide. In this case, as the irreversible capacity and resistance of the positive electrode active material increase, the charge/discharge capacity and discharge capacity retention of the lithium secondary battery, which uses the lithium manganese-based oxide as a positive electrode active material, may be reduced.

On the other hand, when I(018)/I(110) according to Equation 2 is less than 1.15, almost no spinel phase is formed in the lithium manganese-based oxide. In this case, it is difficult to stabilize the unstable surface of the lithium manganese-based oxide because the spinel phase does not sufficiently suppress the anion redox reaction, and thus the lifetime characteristics of the lithium secondary battery, which uses the lithium manganese-based oxide as a positive electrode active material, may not be improved.

In other words, the surface-modified lithium manganese-based oxide as defined herein may suppress the anion redox of $Mn^{4+}$ to $Mn^{2+}$ in the lithium manganese-based oxide, thereby stabilizing the unstable surface of the lithium manganese-based oxide.

In addition, the molybdenum-containing coating layer and spinel phase formed on the surface of the lithium manganese-based oxide through the surface modification serve as a barrier that may prevent side reactions between the lithium manganese-based oxide and the electrolyte, thereby improving the stability and lifetime of the lithium secondary battery, which uses the lithium manganese-based oxide as a positive electrode active material. According to the present invention, the surface resistance of the lithium manganese-based oxide is lowered through surface modification of the lithium manganese-based oxide, thereby preventing early deterioration of the lithium manganese-based oxide and further improving the lifetime characteristics of the lithium secondary battery, which uses the lithium manganese-based oxide as a positive electrode active material.

Lithium secondary battery

According to another aspect of the present invention, a positive electrode that includes a positive electrode current collector and a positive electrode active material layer formed on the positive electrode current collector may be provided. The positive electrode active material layer may include a lithium manganese-based oxide as a positive electrode active material according to the above-described embodiments of the present invention.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 μm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to a negative electrode slurry for forming the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/-

discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (wherein, X is at least one selected from P, As, Sb, Si, Ge, Sn, B, Al, Ga and In) and S may be used. Examples of the sulfide-based solid electrolyte material may include $Li_2S-P_2S_5$, $Li_2S-P_2S_5-LiX$ (wherein, X is a halogen element such as I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (wherein, m and n are integers, and Z is Ge, Zn or Ga), $Li_2S-GeS_2$, $Li_2S-SiS_2-Li_3PO_4$, and $Li_2S-SiS_2-Li_pMO_q$ (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), and $Li_{2+2x}Zn_{1-x}GeO_4$ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.


Preparation Example 1. Preparation of positive electrode active material


Comparative Example 1

(a) Preparation of precursor

An aqueous solution of $NiSO_4 \cdot 6H_2O$ and $MnSO_4 \cdot H_2O$ mixed at a molar ratio of 40:60, NaOH (aq), and $NH_4OH$ (aq)were input to a reactor and stirred. The temperature of the reactor was maintained at 45 °C, and a precursor synthesis reaction was performed while inputting $N_2$ gas into the reactor. After completion of the reaction, washing and dehydration were performed to obtain a $Ni_{0.4}Mn_{0.6}(OH)_2$ precursor with an average particle size of about 12 μm.

(b) First heat treatment

The $Ni_{0.4}Mn_{0.6}(OH)_2$ precursor obtained in step (a) was heat treated at 550 °C in an air atmosphere for 5 hours and then furnace cooled to obtain an oxide precursor (precursor in an oxide state).

(c) Second heat treatment

A mixture was prepared by mixing the oxide precursor obtained in step (b) with LiOH as a lithium raw material (Li/metal excluding Li molar ratio = 1.28).
Afterward, the mixture was heat treated at 900 °C in an $O_2$ atmosphere for 8 hours, furnace cooled, and the resulting mixture was classified to obtain lithium manganese-based oxide without surface modification.

Comparative Example 2

2.0 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.
The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.
The mixture was heat treated at 750 °C in an $O_2$ atmosphere for 8 hours, furnace cooled, and the resulting mixture was classified to obtain a lithium manganese-based oxide with a $Li_2MoO_4$-containing coating layer formed on the surface.

Comparative Example 3

A mixture was prepared by dry mixing the lithium manganese-based oxide obtained in Comparative Example 1 and 1.0 mol% of $(NH_4)_6Mo_7O_{24}$.
Afterward, the mixture was heat treated at 600 °C in an $O_2$ atmosphere for 8 hours, furnace cooled, and the resulting mixture was classified to obtain the lithium manganese-based oxide.
Since $(NH_4)_6Mo_7O_{24}$ dry mixed with the lithium manganese-based oxide was mostly present in a powder state even after heat treatment, it was removed through the classification process, and it was confirmed that a coating layer including Mo was not formed on the surface of the lithium manganese-based oxide.

Example 1

0.5 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.
The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.
Afterward, the mixture was heat treated at 600 °C in an $O_2$ atmosphere for 8 hours, furnace cooled, and the resulting mixture was classified to obtain a lithium manganese-based oxide with a $MoO_3$-containing coating layer formed on the surface.

Example 2

1.0 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.
The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.
Afterward, the mixture was heat treated at 600 °C in an $O_2$ atmosphere for 8 hours, furnace cooled, and the resulting mixture was classified to obtain a lithium manganese-based oxide with a $MoO_3$-containing coating layer formed on the surface.

Example 3

1.5 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.

The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.

Afterward, the mixture was heat treated at 600 °C in an $O_2$ atmosphere for 8 hours, furnace cooled, and the resulting mixture was classified to obtain a lithium manganese-based oxide with a $MoO_3$-containing coating layer formed on the surface.

Example 4

0.5 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.

The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.

Afterward, the mixture was heat treated at 750 °C in an $O_2$ atmosphere for 8 hours, furnace cooled, and the resulting mixture was classified to obtain a lithium manganese-based oxide with a $Li_2MoO_4$-containing coating layer formed on the surface.

Example 5

1.0 mol% of $(NH_4)_6Mo_7O_{24}$ was added to 100 ml of deionized water and stirred at 300 rpm while using $NH_3 \cdot H_2O$ to prepare a coating solution whose pH was adjusted to 9 to 10.

The lithium manganese-based oxide obtained in Comparative Example 1 was added to the coating solution and stirred at 300 rpm for 30 minutes and additionally stirred at 80 °C and 300 rpm for about 12 hours until moisture evaporated. Afterward, the same was additionally dried at 150 °C for 12 hours to prepare a mixture.

Afterward, the mixture was heat treated at 750 °C in an $O_2$ atmosphere for 8 hours, furnace cooled, and the resulting mixture was classified to obtain a lithium manganese-based oxide with a $Li_2MoO_4$-containing coating layer formed on the surface.

Comparative Example 4

The lithium manganese-based oxide with a $Li_2MoO_4$-containing coating layer formed on the surface, which was obtained in Example 5, was added to 100 ml of deionized water and stirred at 300 rpm for 10 minutes. Afterward, the lithium manganese-based oxide remaining on the filter after filtration was dried at 150 °C for 12 hours to obtain the final product. It was confirmed that as the lithium manganese-based oxide was washed with deionized water, a coating layer including Mo was not formed on the surface of the lithium manganese-based oxide in the final product.

Preparation Example 2. Manufacture of lithium secondary battery (half-cell)

90 wt% of each positive electrode active material prepared by Preparation Example 1, 5.5 wt% of carbon black, and 4.5 wt% of PVDF binder were dispersed in 30 g of N-methyl-2-pyrrolidone (NMP) to prepare a positive electrode slurry. The positive electrode slurry was uniformly applied on an aluminum thin film with a thickness of 15 $\mu$m and vacuum dried at 135 °C to manufacture a positive electrode for a lithium secondary battery.

A half-cell was manufactured by using a lithium foil as a counter electrode to the positive electrode, a porous polyethylene membrane (Celgard 2300, thickness: 25 $\mu$m) as a separator, and an electrolyte in which $LiPF_6$ was present at a concentration of 1.15 M in a solvent including ethylene carbonate, dimethyl carbonate, and ethyl methyl carbonate mixed in a volume ratio of 2:4:4.

Preparation Example 3, Manufacture of lithium secondary battery (full-cell)

90 wt% of each positive electrode active material prepared by Preparation Example 1, 4.5 wt% of carbon black, and 5.5 wt% of PVDF binder were dispersed in N-methyl-2-pyrrolidone (NMP) to prepare a positive electrode slurry.

The positive electrode slurry was uniformly applied on an aluminum thin film with a thickness of 15 $\mu$m and vacuum dried at 135 °C to manufacture a positive electrode for a lithium secondary battery, in which a positive electrode active material layer was formed.

A full-cell was manufactured by using a graphite electrode as a counter electrode to the positive electrode, a porous polyethylene membrane (Celgard 2300, thickness: 25 $\mu$m) as a separator, and an electrolyte in which $LiPF_6$ was present at a concentration of 1.15 M in a solvent including ethylene carbonate, dimethyl carbonate, and ethyl methyl carbonate mixed in a volume ratio of 2:4:4.

Experimental Example 1. SEM/EDS analysis of positive electrode active material

For the lithium manganese-based oxides selected from the positive electrode active materials according to Example 3 and Example 4, SEM/EDS analysis was performed to confirm the surface modification of the lithium manganese-based oxide.

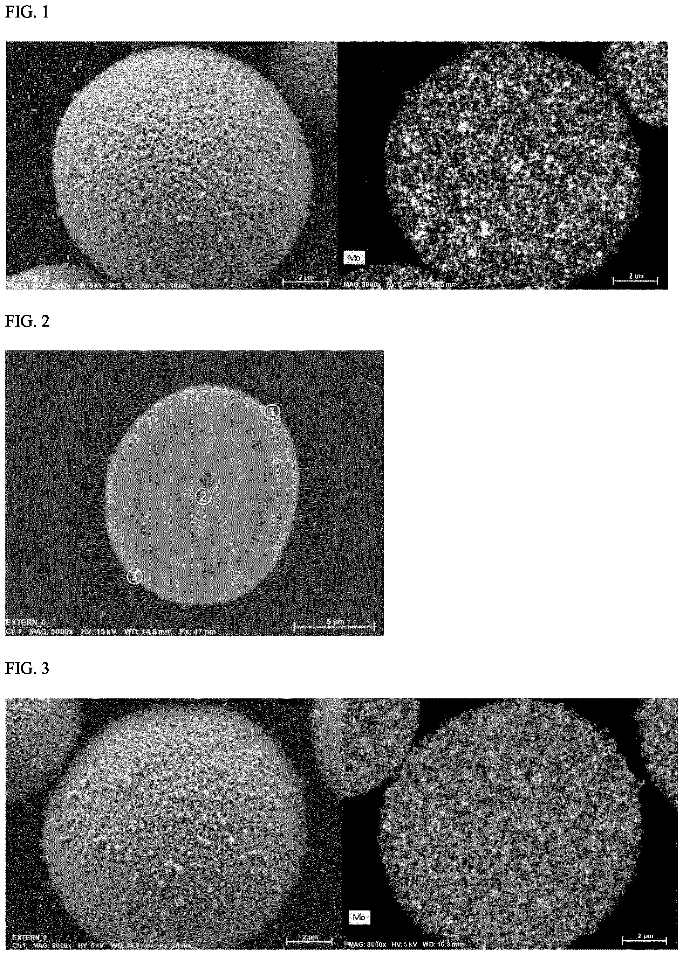

Referring to FIG. 1, showing the SEM image and the EDS analysis results (target element: Mo) of the surface of lithium manganese-based oxide (secondary particles) according to Example 3, and FIG. 3, showing the SEM image and the EDS analysis results (target element: Mo) of the surface of lithium manganese-based oxide (secondary particles) according to Example 4, it is confirmed that the lithium manganese-based oxide is present as a secondary particle in which a plurality of primary particles are aggregated, and Mo, the target element, is on the surface of the lithium manganese-based oxide. In addition, it is confirmed through the EDS mapping results that Mo is present at a higher concentration on the surface of the secondary particles compared to the inside of the secondary particles.

In addition, as shown in FIG. 2, after obtaining the cross-sectional SEM image of the lithium manganese-based oxide selected from the positive electrode active material according to Example 3, EDS mapping for the target elements, Ni, Mn, and Mo, was performed and the concentration (at%) of Ni, Mn, and Mo was confirmed at designated points (①, ②, and ③) in the lithium manganese-based oxide through line-scanning, and the results thereof are shown in Table 1 below.

[Table 1]

| Points | Concentration (at%) | | |
|--------|------|------|------|
|        | Mn   | Ni   | Mo   |
| ①      | 59.44 | 26.31 | 14.25 |
| ②      | 57.78 | 41.44 | 0.78 |
| ③      | 55.95 | 31.95 | 12.10 |

Referring to the results in Table 1, it is confirmed that molybdenum is present at a higher concentration on the surface of the secondary particles compared to the inside of the secondary particles.

Experimental Example 2. XDR analysis of positive electrode active material

For each positive electrode active material prepared according to Preparation Example 1, X-ray diffraction (XRD) analysis was performed to confirm the coating material and the space group of the phase present in the lithium manganese-based oxide included in the positive electrode active material, and peaks of the (003), (018), (104), and (110) crystal planes of the lithium manganese-based oxide were detected. XRD analysis was performed through a Bruker D8 Advance diffractometer using Cu-K$\alpha$ radiation (1.540598 Å).

Specifically, among diffraction patterns obtained from XRD analysis, peaks specific to the phase belonging to the C2/m space group may appear at 2θ=20.8±1°, and peaks specific to the phase belonging to the R3-m space group may appear at 2θ=18.6±1°. Whether the spinel phase belonging to the Fd-3m space group is formed is determined by the changes in peaks specific to the (104) plane, which appear at 2θ=43.5° to 45.0°, and peaks specific to the (110) plane, which appear at 2θ=64.7° to 65.5°.

Among diffraction patterns obtained from XRD analysis, peaks specific to the Mo-containing coating layer may be observed around 2θ=30°. For example, peaks specific to $Li_2MoO_4$ may appear at 2θ=29.8±0.3°, and peaks specific to $MoO_3$ may appear at 2θ=30.7±0.3°.

The XRD analysis results are shown in Tables 2 and 3 below.

[Table 2]

| Classification | Presence or absence of phase | | | Presence or absence of coating material | |
|---|---|---|---|---|---|
| | C2/m | R3-m | Fd-3m | $MoO_3$ | $Li_2MoO_4$ |
| Example 1 | O | O | O | O | X |
| Example 2 | O | O | O | O | X |
| Example 3 | O | O | O | O | X |
| Example 4 | O | O | O | X | O |
| Example 5 | O | O | O | X | O |
| Comparative Example 1 | O | O | X | X | X |
| Comparative Example 2 | O | O | O | X | O |
| Comparative Example 3 | O | O | X | X | X |
| Comparative Example 4 | O | O | O | X | X |

[Table 3]

| Classification | Peak intensity ratio | | Full width at half maximum | |
|---|---|---|---|---|
| | I(003)/I(104) | I(018)/I(110) | (003) | (104) |
| Example 1 | 1.591 | 1.157 | 0.145 | 0.270 |
| Example 2 | 1.610 | 1.212 | 0.145 | 0.274 |
| Example 3 | 1.827 | 1.501 | 0.146 | 0.343 |
| Example 4 | 1.732 | 1.325 | 0.144 | 0.304 |
| Example 5 | 2.012 | 1.545 | 0.141 | 0.381 |
| Comparative Example 1 | 1.587 | 1.149 | 0.143 | 0.266 |
| Comparative Example 2 | 2.723 | 2.115 | 0.139 | 0.542 |
| Comparative Example 3 | 1.617 | 1.158 | 0.144 | 0.277 |
| Comparative Example 4 | 2.033 | 1.560 | 0.140 | 0.382 |

When the spinel phase belonging to the Fd-3m space group is formed in the lithium manganese-based oxide, peaks specific to the (104) plane and peaks specific to the (110) plane collapse. Therefore, the result for peaks specific to the (104) plane was calculated based on the highest intensity of the pattern observed at $2\theta=43.5°$ to $45.0°$, and the result for peaks specific to the (110) plane was calculated based on the highest intensity of the pattern observed at $2\theta=64.7°$ to $65.5°$.

Experimental Example 3. Evaluation of electrochemical properties of lithium secondary battery (half-cell)

For the lithium secondary batteries (half-cell) manufactured in Preparation Example 2, charge/discharge experiments were conducted using an electrochemical analysis device (Toscat-3100 from TOYO SYSTEM CO., LTD.) at 25 °C, a voltage ranging from 2.0 V to 4.6 V, and a discharge rate of 0.1 C and 2.0 C to measure initial charge capacity, initial discharge capacity, initial reversible efficiency, and rate characteristics (discharge capacity rate; rate capability (C-rate)). For reference, in the case of Comparative Example 3, $Li_2MoO_4$ dry mixed with the lithium manganese-based oxide was removed through the classification process due to its mostly powder state even after heat treatment, and a coating layer including $Li_2MoO_4$ was not formed on the surface of the lithium manganese-based oxide. Therefore, Comparative Example 3 was expected to be substantially the same as Comparative Example 1 and excluded from the evaluation of the electrochemical properties of the half-cell.

The measurement results are shown in Table 4 below.

[Table 4]

| Classification | Initial charge capacity | Initial discharge capacity | Initial efficiency | Discharge capacity according to C-rate (2.0 C) | Discharge capacity retention at 2.0 C/0.1 C |
|---|---|---|---|---|---|
| | mAh/g | mAh/g | % | mAh/g | % |
| Example 1 | 253.9 | 230.3 | 90.7 | 186.9 | 81.1 |
| Example 2 | 249.8 | 228.9 | 91.7 | 185.0 | 80.8 |
| Example 3 | 252.8 | 225.2 | 89.1 | 176.3 | 78.3 |
| Example 4 | 258.1 | 235.3 | 91.2 | 191.0 | 81.2 |
| Example 5 | 254.9 | 232.5 | 91.2 | 168.8 | 72.6 |
| Comparative Example 1 | 256.0 | 228.6 | 89.3 | 185.1 | 81.0 |
| Comparative Example 2 | 243.5 | 223.8 | 91.9 | 148.6 | 66.4 |
| Comparative Example 4 | 194.3 | 178.7 | 93.9 | 85.8 | 48.0 |

Referring to the half-cell evaluation results in Table 4, in the case of the lithium secondary battery using the positive electrode active material according to Comparative Example 2, it can be seen that the electrochemical properties were lowered due to excessive formation of the spinel phase in the positive electrode active material, compared to Comparative Example 1. In the lithium secondary battery using the positive electrode active material according to Comparative Example 4, although the spinel phase was present in the positive electrode active material, the Mo-containing coating layer was removed and defects occurred on the surface of the positive electrode active material during the subsequent cleaning process, and thus electrochemical properties were rapidly reduced.

Experimental Example 4. Evaluation of electrochemical properties of lithium secondary battery (full-cell)

For the lithium secondary batteries (full-cell) manufactured in Preparation Example 3, after completing the 6-cycle formation process using an electrochemical analysis device (Toscat-3100 from TOYO SYSTEM CO., LTD.) under the conditions of a voltage ranging from 2.0 V to 4.6 V at 0.2 C/0.2 C and 25 °C, charging/discharging was performed 500 times under the conditions of a voltage ranging from 2.0 V to 4.6 V at 1 C/1 C and 25 °C. The initial (1st cycle) discharge capacity and the ratio of the discharge capacity at the 500th cycle to the initial discharge capacity (cycle capacity retention) were measured.
The measurement results are shown in Table 5 below.

[Table 5]

| Classification | Initial discharge capacity (mAh/g) | 500th cycle capacity retention (%) |
|---|---|---|
| Example 1 | 184.63 | 78.7 |
| Example 2 | 182.32 | 77.5 |
| Example 4 | 185.66 | 77.6 |
| Example 5 | 181.57 | 78.4 |
| Comparative Example 1 | 189.55 | 23.7 |

Referring to the results in Table 5, in the case of Comparative Example 1, which had electrochemical properties similar to those of Examples in the half-cell evaluation results, the long-term lifetime characteristics were excessively low compared to Examples. Thus, it was confirmed that the positive electrode active material defined herein was more suitable for ensuring the stable lifetime characteristics of the lithium secondary battery for a long time compared to the positive electrode active material according to Comparative Example 1.
According to the present invention, it is possible to overcome the limitations of the existing overlithiated lithium manganese-based oxide, which has disadvantages in terms of electrochemical properties and/or stability compared to the commercially available ternary lithium composite oxide with a nickel-cobalt-manganese (NCM) or nickel-cobalt-aluminum (NCA) composition.

Specifically, according to the present invention, through surface modification of the lithium manganese-based oxide, the anion redox of $Mn^{4+}$ to $Mn^{2+}$ in the lithium manganese-based oxide can be suppressed, thereby stabilizing the unstable surface of the lithium manganese-based oxide.

Since the OLO such as the lithium manganese-based oxide exhibits high capacity under high-voltage operating conditions, it is important to reduce side reactions between the lithium manganese-based oxide and the electrolyte in that the possibility of side reactions between the lithium manganese-based oxide and the electrolyte increases as the operating voltage increases.

As side reactions between the lithium manganese-based oxide and the electrolyte decrease, the stability and lifetime of the lithium secondary battery, which uses the lithium manganese-based oxide as a positive electrode active material, can be improved. In particular, a positive electrode active material with suppressed side reactions with the electrolyte makes it possible to drive a lithium secondary battery at a higher voltage. In addition, it is possible to form a spinel phase on at least a portion of the surface of the lithium manganese-based oxide during the surface modification of the lithium manganese-based oxide.

According to the present invention, through surface modification of the lithium manganese-based oxide, the surface resistance of the lithium manganese-based oxide can be reduced, thereby preventing early deterioration of the lithium manganese-based oxide and further improving the lifetime characteristics of the lithium secondary battery, which uses the lithium manganese-based oxide as a positive electrode active material.

In addition to the above-described effects, specific effects of the present invention are described above while describing specific details for implementing the present invention.

Although the embodiments of the present invention have been described, those skilled in the art can modify and change the present invention in various ways by changing, deleting, or adding components without departing from the spirit of the present invention as set forth in the claims, which will also be included within the scope of the rights of the present invention.

## Claims

1. A positive electrode active material comprising a lithium manganese-based oxide in which a phase belonging to the C2/m space group and a phase belonging to the R3-m space group are dissolved,

   wherein the lithium manganese-based oxide further includes a spinel phase belonging to the Fd-3m space group, in X-ray diffraction analysis of the positive electrode active material using Cu-K$\alpha$ rays, the intensity ratio between the diffraction peaks of the (003) plane and the (104) plane satisfies Equation 1 below, and
   the intensity ratio between the diffraction peaks of the (018) plane and the (110) plane satisfies Equation 2 below:

$$[\text{Equation 1}]$$

$$1.59 \leq I(003)/I(104) \leq 2.6,$$

$$[\text{Equation 2}]$$

$$1.15 \leq I(018)/I(110) \leq 1.55.$$

2. The positive electrode active material of claim 1, wherein in X-ray diffraction analysis of the positive electrode active material using Cu-K$\alpha$ rays, the full width at half maximum (FWHM) of the (104) plane diffraction peak is 0.27 to 0.50.

3. The positive electrode active material of any one of claims 1 to 2, wherein the lithium manganese-based oxide is represented by Chemical Formula 1 below,

   [Chemical Formula 1]     $rLi_2MnO_{3-c}X'_c \cdot (1-r)Li_aM1_xM2_yO_{2-b}X_b$

   wherein, M1 is at least one selected from Ni and Mn,
   M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,

M2 does not overlap M1,

X and X' each are independently halogens capable of substituting at least some of the oxygen in the lithium manganese-based oxide, and

$0 < r \leq 0.7$, $0 \leq a \leq 1$, $0 \leq b \leq 0.1$, $0 \leq c \leq 0.1$, $0 < x \leq 1$, $0 \leq y < 1$, and $0 < x+y \leq 1$ are satisfied.

4. The positive electrode active material of any one of claims 1 to 3, wherein the lithium manganese-based oxide is a solid solution of a phase belonging to the C2/m space group, a phase belonging to the R3-m space group, and a spinel phase belonging to the Fd-3m space group.

5. The positive electrode active material of claim 4, wherein the lithium manganese-based oxide is represented by Chemical Formula 2 below,

[Chemical Formula 2]  $(1-z)\{rLi_2MnO_{3-c}X'_c \cdot (1-r)Li_aM1_xM2_yO_{2-b}X_b\} \cdot zLi(Li_dMn_{2-d-e}M3_e)O_{4-g}X''_g$

wherein, M1 is at least one selected from Ni and Mn,

M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,

M2 does not overlap M1,

M3 is at least one selected from Ni, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,

X, X', and X" each are independently halogens capable of substituting at least some of the oxygen in the lithium manganese-based oxide, and

$0 < r \leq 0.7$, $0 < a \leq 1$, $0 \leq b \leq 0.1$, $0 \leq c \leq 0.1$, $0 < x \leq 1$, $0 \leq y < 1$, $0 < x+y \leq 1$, $0 < z \leq 0.5$, $0 \leq d \leq 1$, $0 < e \leq 1$, and $0 \leq g \leq 0.1$ are satisfied.

6. The positive electrode active material of claim 5, wherein the spinel phase is represented by $LiMn_{1.5}Ni_{0.5}O_4$.

7. The positive electrode active material of any one of claims 1 to 3, wherein the lithium manganese-based oxide includes a core portion in which a phase belonging to the C2/m space group and a phase belonging to the R3-m space group are dissolved, and a shell portion, which is present on at least a portion of the surface of the core portion and has a spinel phase belonging to the Fd-3m space group, and the core portion and the shell portion are dissolved core-shell particles.

8. The positive electrode active material of claim 7, wherein the core portion is a secondary particle in which a plurality of primary particles are aggregated, and the shell portion is present on at least a portion of the surface of the primary particle.

9. The positive electrode active material of claim 7, wherein the core portion is a secondary particle in which a plurality of primary particles are aggregated, and the shell portion is present on at least a portion of the surface of the secondary particle.

10. The positive electrode active material of claim 7, wherein a molybdenum-containing coating layer is present on at least a portion of the surface of the shell portion.

11. The positive electrode active material of claim 10, wherein the molybdenum-containing coating layer includes at least one selected from MoOs and $Li_2MoO_4$.

12. The positive electrode active material of any one of claims 1 to 11, wherein the lithium manganese-based oxide is present as secondary particles in which a plurality of primary particles are aggregated, and molybdenum is present at a higher concentration on the surface of the secondary particles compared to the inside of the secondary particles.

13. The positive electrode active material of any one of claims 1 to 12, wherein the lithium manganese-based oxide is present as secondary particles in which a plurality of primary particles are aggregated and has a gradient in which the concentration of molybdenum decreases from the surface of the secondary particles toward the inside of the secondary particles along a grain boundary between the primary particles.

14. A positive electrode comprising the positive electrode active material of any one of claims 1 to 13.

**15.** A lithium secondary battery comprising the positive electrode of claim 14.

FIG. 1

FIG. 2

FIG. 3

EP 4 545 487 A1

## EUROPEAN SEARCH REPORT

**Application Number**

EP 24 20 4952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU ZHI ET AL: "Stabilized Co-Free Li-Rich Oxide Cathode Particles with An Artificial Surface Prereconstruction", ADVANCED ENERGY MATERIALS, [Online] vol. 10, no. 35, 6 August 2020 (2020-08-06), XP093260425, ISSN: 1614-6832, DOI: 10.1002/aenm.202001120 Retrieved from the Internet: URL:https://onlinelibrary.wiley.com/doi/full-xml/10.1002/aenm.202001120> [retrieved on 2025-03-18] * abstract * * figure 2 * * par. 2. Results and discussion * * par. 4. Experimental section * ----- | 1-15 | INV. C01G53/50 H01M4/505 H01M4/36 |
| X | FENG WU ET AL: "Spinel/Layered Heterostructured Cathode Material for High-Capacity and High-Rate Li-Ion Batteries", ADVANCED MATERIALS, VCH PUBLISHERS, DE, vol. 25, no. 27, 6 June 2013 (2013-06-06), pages 3722-3726, XP071870074, ISSN: 0935-9648, DOI: 10.1002/ADMA.201300598 * the whole document * ----- | 1-15 | |
| | | | TECHNICAL FIELDS SEARCHED (IPC) |
| | | | C01G H01M |
| A | EP 4 216 311 A1 (ECOPRO BM CO LTD [KR]) 26 July 2023 (2023-07-26) * examples * ----- | 1-15 | |

The present search report has been drawn up for all claims

| Place of search | Date of completion of the search | Examiner |
|---|---|---|
| Munich | 19 March 2025 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

**ANNEX TO THE EUROPEAN SEARCH REPORT**
**ON EUROPEAN PATENT APPLICATION NO.**                    EP 24 20 4952

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | Publication date |
|---|---|---|---|
| EP 4216311 A1 | 26-07-2023 | CN 116250101 A | 09-06-2023 |
| | | CN 116325225 A | 23-06-2023 |
| | | EP 4216311 A1 | 26-07-2023 |
| | | EP 4216312 A1 | 26-07-2023 |
| | | EP 4231389 A1 | 23-08-2023 |
| | | JP 7597921 B2 | 10-12-2024 |
| | | JP 7638375 B2 | 03-03-2025 |
| | | JP 2023544060 A | 19-10-2023 |
| | | JP 2023544339 A | 23-10-2023 |
| | | JP 2023551720 A | 12-12-2023 |
| | | JP 2025015605 A | 30-01-2025 |
| | | US 2023231128 A1 | 20-07-2023 |
| | | US 2023261179 A1 | 17-08-2023 |
| | | US 2023268497 A1 | 24-08-2023 |
| | | US 2025087687 A1 | 13-03-2025 |
| | | WO 2022119156 A1 | 09-06-2022 |
| | | WO 2022119157 A1 | 09-06-2022 |
| | | WO 2022119158 A1 | 09-06-2022 |